# FASCICULE DE BREVET EUROPEEN

(11) **EP 1 758 429 B1**
(45) Date de publication et mention de la délivrance du brevet: **10.03.2010**
(21) Numéro de dépôt: 06119572.3
(22) Date de dépôt: 25.08.2006
(51) Int. Cl.: H05B 3/06, F01D 5/02

(54) **Dispositif de chauffage d'une pièce cylindrique. Utilisation dans l'assemblage d'un palier inter-arbres dans une turbomachine**
Heizeinrichtung zur Heizung eines zylindrischen Teils, und Verwendung zur Montage eines Zwischenachslagers einer mehrstufigen Turbomaschine
Heating device for a cylindrical part and use thereof in the assembly of an inter-axle bearing for a multi-stage turbine machine

(30) Priorité: 26.08.2005 FR 0552578
(43) Date de publication de la demande: 28.02.2007
(73) Titulaire: SNECMA, 75015 Paris (FR)
(72) Inventeur: Bergerot, François, 77190, Dammarie les Lys (FR); Leeder, Laurent, 91250, Saint-Germain Les Corbeil (FR); Malterre, Jacques, 77950, Moisenay (FR); Souart, M. Bernard, 77176, Savigny le Temple (FR); Thomas, Hubert, 77176, Savigny le Temple (FR)
(74) Mandataire: David, Daniel

(56) Documents cités:
- EP-A- 0 330 630
- GB-A- 723 882
- US-A- 3 680 979
- US-A- 5 537 814

## Description

La présente invention concerne le domaine des turbomachines et vise en particulier les moteurs à turbine à gaz multi-corps. Elle se rapporte aux opérations d'assemblage des moteurs et en particulier au montage du module de turbine basse pression sur un corps haute pression.

Un turboréacteur à turbosoufflante avant et à double corps par exemple, comprend un corps basse pression BP et un corps haute pression HP. Le corps BP tourne à une première vitesse et la turbine BP entraîne la soufflante. Le corps HP tourne à une vitesse différente de celle de la turbine BP. Les arbres des deux corps sont concentriques. L'arbre basse pression est guidé en rotation dans des paliers supportés par la structure fixe du moteur, situés respectivement en aval de la turbine et en amont du compresseur haute pression. L'arbre du corps haute pression est guidé en rotation par des paliers supportés par la structure fixe du moteur en amont et par l'arbre du corps basse pression au moyen de paliers inter arbres en aval. Ce dernier est du type à rouleaux et situé, au moins selon un moteur connu, entre la turbine haute pression et la turbine basse pression. Le palier comprend une bague intérieure équipée de rouleaux maintenus par une cage sur l'arbre BP et une bague extérieure montée avec serrage à froid dans l'arbre HP. Le montage de ce palier, c'est-à-dire l'assemblage de la bague extérieure avec l'ensemble formé des rouleaux, de la cage et de la bague intérieure, est réalisé en même temps que l'accostage de la turbine basse pression où l'arbre préalablement monté avec la turbine basse pression est guidé dans le corps haute pression. Par le terme accostage, on désigne ici tout ou partie du déplacement en translation du module de turbine BP jusqu'à ce que la bride du carter externe de celui-ci vienne en contact avec la bride correspondante du module HP.

Il s'ensuit que le montage du palier inter arbres est réalisé en aveugle. L'opérateur n'a aucune visibilité pour surveiller, en particulier, l'engagement des rouleaux dans le rotor HP puis dans la bague extérieure. Cette opération comporte de forts risques de dégradation du palier si les conditions ne sont pas maîtrisées. Le risque le plus important pour le palier est un contact dur des rouleaux contre l'écrou de retenue de la bague extérieure et la bague elle-même.

Actuellement, les moyens utilisés ne permettent pas d'assurer un montage de la turbine BP sans impact néfaste pour ce palier inter-arbres en raison du mode de chauffage utilisé et du positionnement imprécis de la turbine BP. En particulier le chauffage de la partie HP (équipée de la bague extérieure) est réalisé par l'intérieur du tourillon au moyen d'un diffuseur alimenté par une chaufferette. La mesure de température est effectuée manuellement par une sonde appliquée sur l'extérieur de la partie HP. Les investigations effectuées sur ce mode opératoire ont révélé plusieurs inconvénients :
- une hétérogénéité relativement importante, de l'ordre de 20°C, des niveaux de température des pièces chauffées,
- un risque élevé d'apport de pollution par l'air ambiant prélevé pour le chauffage et le dispositif de chauffe lui-même, et
- un risque élevé de détérioration de la bague extérieure du roulement par contact du diffuseur. Ce risque est d'autant plus élevé que le jeu entre le diffuseur et la bague extérieure est de quelques millimètres seulement et l'ensemble est installé sur des roulettes risquant ainsi d'être déplacé par inadvertance par les opérateurs.

L'invention a pour objectif d'améliorer le dispositif de chauffage du tourillon et plus généralement de réaliser un dispositif de chauffage d'une pièce cylindrique.

Conformément à l'invention, on atteint ces objectifs avec un dispositif de chauffage d'une pièce cylindrique de diamètre donné, au moyen de gaz chaud, caractérisé par le fait qu'il comprend au moins deux chaufferettes délivrant chacune un flux de gaz chaud et débouchant dans une enceinte annulaire, dont le diamètre intérieur est légèrement supérieur au dit diamètre donné.

De préférence les chaufferettes sont équidistantes les unes des autres, l'enceinte comprend une paroi intérieure perforée.

Avantageusement les chaufferettes sont électriques. La température peut être régulée en continu.

Plus particulièrement l'invention porte sur l'utilisation d'un tel dispositif pour le chauffage d'un tourillon métallique dans lequel on monte une bague de roulement d'un palier ; plus particulièrement on mesure la température à la surface du tourillon et on pilote l'alimentation en gaz chaud en fonction de la dite température.

L'invention s'applique notamment à l'assemblage d'un palier inter-arbres dans une turbomachine à double corps.

D'autres caractéristiques et avantages ressortiront de la lecture de la description qui suit d'un mode de réalisation non limitatif de l'invention, appliquée au montage d'un module de turbine basse pression dans le corps haute pression d'un moteur à turbine à gaz à double corps, se référant aux dessins annexés sur lesquels :
- la figure 1 montre un moteur en cours de montage ;
- la figure 2 montre le détail du palier inter-arbres avant assemblage ;
- la figure 3 montre la même zone que la figure 2 après assemblage ;
- les figures 4 à 6 montrent un appareillage supportant un dispositif de chauffage, respectivement en place pour être utilisé et dans une position de repli ;
- la figure 7 montre en détail le dispositif de chauffage en place pour être utilisé ;
- la figure 8 est une vue en coupe axiale du dispositif de la figure 7 en place ;
- la figure 9 représente un détail du dispositif montrant un capteur de température.

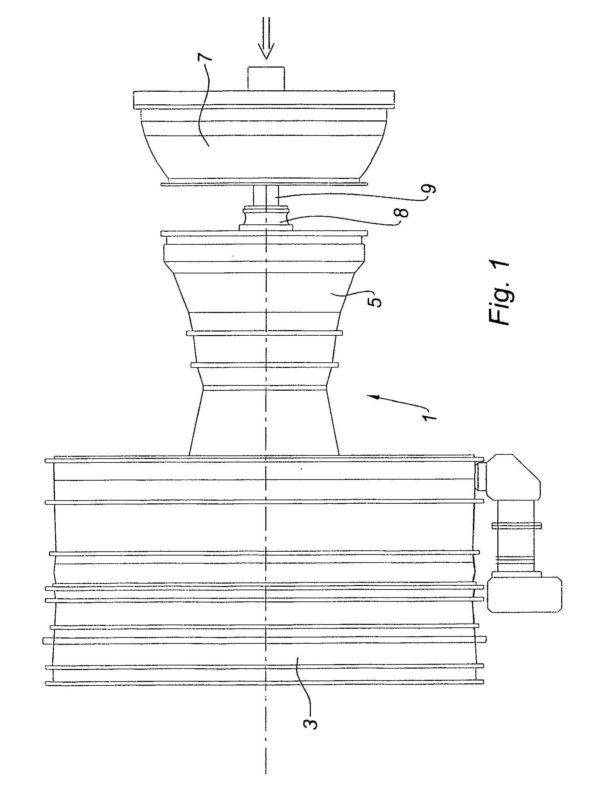

La figure 1 montre un moteur 1 en cours de montage dont on ne voit que les carters extérieurs. Il s'agit ici d'un turboréacteur à double flux et double corps tel que le CFM56. Il comprend une soufflante avant 3 et un module 5, dit premier module, constitué par le corps haute pression HP avec son arbre, dit premier arbre. Ces éléments sont déjà assemblés. On est ici en train de monter le module de turbine basse pression BP 7, dit deuxième module, dont l'arbre 9, dit deuxième arbre, est déjà engagé dans le corps HP. La zone critique se situe au niveau de la zone 8 du palier inter-arbres dont la visibilité est nulle.

Dans la suite de la description, on décrit donc le montage de ce deuxième module, le module basse pression, dans le premier module, le corps haute pression.

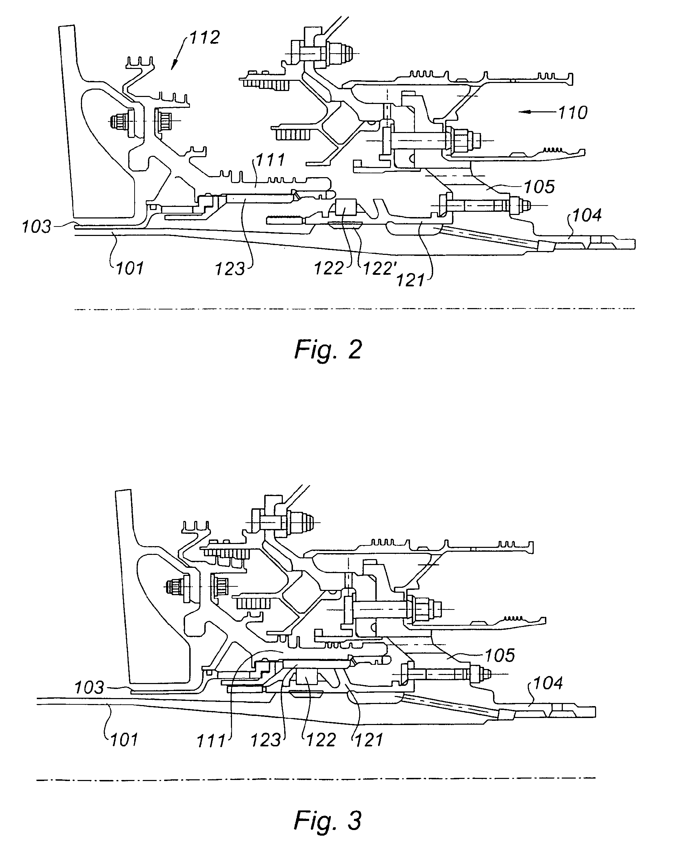

Sur la figure 2, on voit cette zone en coupe plus en détail. L'arbre 101, deuxième arbre, du deuxième module, turbine BP, est logé dans l'arbre 103, premier arbre, du premier module, le corps HP. L'arbre 101 comprend en son extrémité, à droite sur la figure, un tourillon 104 pour le montage d'un palier. Une bride radiale 105 permet le montage des différents éléments constituant la turbine BP 110 visible partiellement.

L'arbre 103 du corps HP se prolonge par un tourillon 111 à son extrémité aval. On voit une partie de turbine 112 du corps HP seulement.

Le palier inter-arbres 120, connu ne soi, comprend une bague intérieure 121, fixée sur l'arbre 101 avec les éléments de roulement, tels que des rouleaux 122, dont la cage 122' est sertie sur la bague 121. La bague extérieure 123 est montée serrée à froid à l'intérieur du tourillon 111. Elle est verrouillée en place par un écrou 125. La figure 3 montre les mêmes éléments après assemblage. L'assemblage est effectué par déplacement en translation du module de turbine BP 110 avec l'arbre 101 vers la gauche par rapport à la figure 2, après dilatation du tourillon ensemble avec la bague extérieure, par chauffage, le module HP étant fixe. On comprend qu'en raison des faibles tolérances, le risque est grand d'un contact entre les pièces du roulement. Ce contact dur peut être la cause de griffures, rainures ou amorces d'écaillages qui sont susceptibles de conduire à la rupture du roulement.

La société demanderesse a mis au point un procédé et un appareillage permettant un montage sécurisé du module BP dans cet environnement.

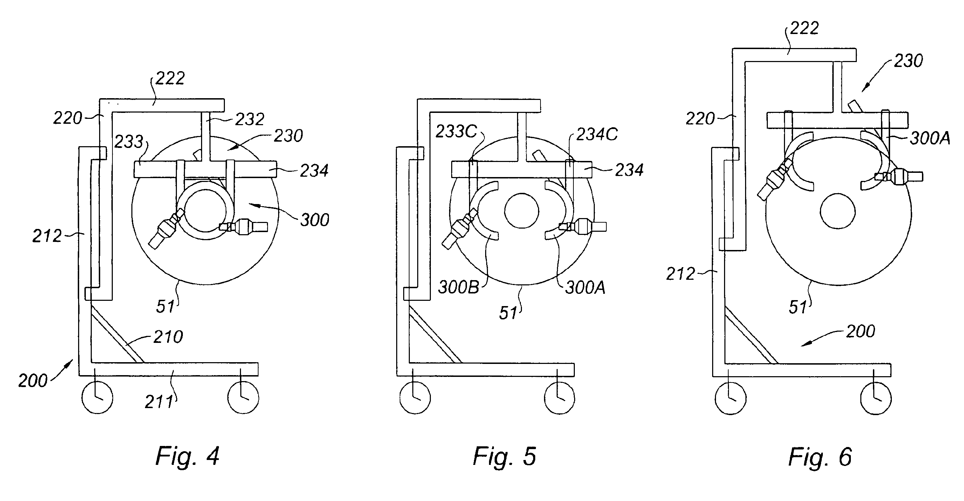

L'appareillage 200 comprend un bâti 210 mobile, auquel est suspendu un moyen de chauffage du tourillon de corps HP. Cet ensemble est représenté sur les figures 4, 5 et 6 dans plusieurs positions.

Le bâti 210 comprend un chariot 211, monté sur des roulettes, avec un cadre vertical 212. Un potence 220 est montée sur ce cadre pourvu de rails de manière à pouvoir coulisser entre une première position basse, active ou d'utilisation, représentée sur la figure 4 et un deuxième position haute, de repli, que l'on voit sur la figure 6.

Un support 230 en forme de T renversé est fixé à l'extrémité du bras horizontal 222 de la potence 220.

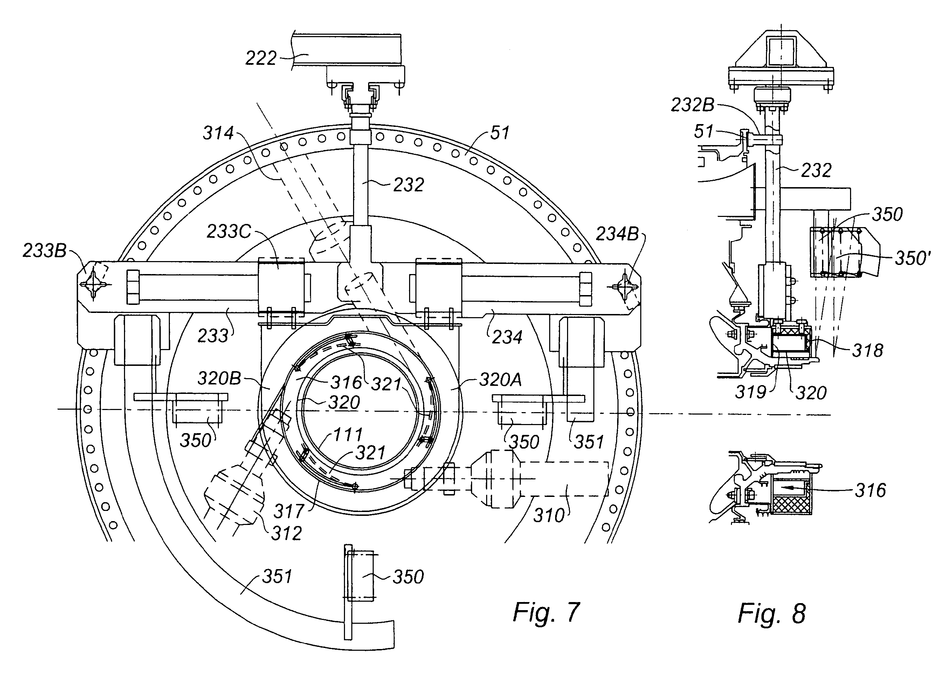

Le support 230 comprend un bras vertical 232 fixé rigidement par rapport au bras horizontal 222 de la potence, et deux branches horizontales 233 et 234. Ces dernières sont agencées pour supporter deux coulisseaux 233C et 234C supportant chacun une moitié du dispositif de chauffage annulaire 300, 300A et 300B respectivement, voir figure 7.

L'appareillage est représenté en position active sur la figure 4. Le support 230 est en appui contre la bride 51 du carter du module du corps HP. A partir de cette position, on dégage le dispositif de chauffage en écartant les deux moitiés 300A et 300B qui se déplacent parallèlement aux deux branches 233 et 234 avec leur coulisseau respectif 233C et 234C. Une fois le dispositif de chauffage ouvert on le dégage vers le haut en commandant le coulissement de la potence 220 dans les rails du cadre 212. L'appareillage est représenté dans la position haute de repli sur la figure 6.

La mise en place du dispositif de chauffage s'effectue selon la séquence inverse.

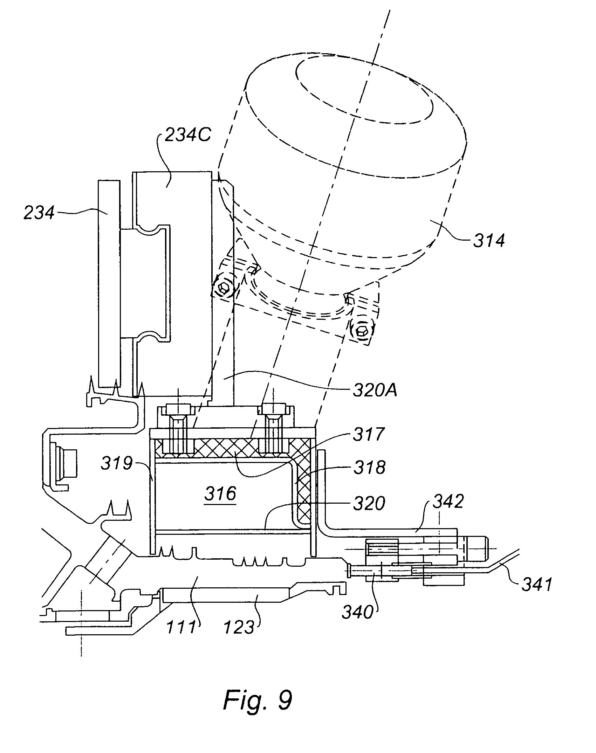

On décrit plus en détail le dispositif de chauffage en relation avec les figures 7, 8 et 9. La figure 7 qui est une vue agrandie de la figure 4 montre le dispositif de chauffage avec trois chaufferettes 310, 312 et 314, en traits pointillés, disposées sensiblement tangentiellement à une enceinte annulaire 316 formant diffuseur et répartiteur d'air. Elles sont équidistantes les unes des autres et délivrent un gaz chauffé à une température contrôlée, de l'air notamment, selon au moins une composante tangentielle. On voit sur la figure 9 que les chaufferettes en raison de l'encombrement de la suspension ne peuvent être disposées strictement tangentiellement à la chambre annulaire 316. Cette dernière est délimitée par une enveloppe cylindrique 317 et deux parois, 318 et 319, perpendiculaires à l'axe du moteur. Une paroi cylindrique intérieure 320 est perforée et ménage un espace avec le tourillon 111. L'enveloppe comprend une matière isolante thermiquement comme on le voit sur les parois 317 et 318.

Des déflecteurs 321 sont disposés à l'intérieur de l'enceinte annulaire entre deux chaufferettes consécutives. Ces déflecteurs sont arqués et incliné vers l'axe du moteur. L'extrémité recevant le flux gazeux d'une chaufferette adjacente est à une distance plus grande de l'axe que l'autre extrémité. De cette façon les flux de gaz débouchant dans l'enceinte sont à la fois entraînés dans un mouvement de rotation autour de l'axe du moteur avec une composante centripète vers la paroi perforée 320.

La paroi 318 du côté extrémité du tourillon vient au contact de ce dernier. La paroi 319 de l'autre côté ménage un espace ou des ouvertures de fuite des gaz qui vont chauffer la masse plus épaisse à cet endroit du tourillon. Les éléments de l'enveloppe 317, 318, 319 définissant l'enceinte annulaire 316 sont en deux parties rattachés à leur support respectif 320 A et B. Ces supports sont eux-mêmes suspendus à un coulisseau, 233C et 234C respectivement.

Le support 230 est en appui contre la bride 51 par des butées dont l'une est visible sur la figure 8. Il s'agit de la butée 232B solidaire du bras vertical 232 du support. Les bras 233 et 234 comportent également des moyens de calage 234B et 233B que l'on voit sur la figure 7. Les cales sont escamotables et viennent se positionner en arrière de la bride 51 pour assurer l'immobilisation du support sur la bride 51.

Le dispositif sert de support à trois thermocouples 340 répartis à équidistance les uns des autres. La figure 9 est une vue partielle en coupe du dispositif de chauffage 300 au niveau de l'un des thermocouples 340. Celui-ci est en appui contre la surface aval du tourillon pour en capter la température. Un câble 341 relie le capteur au centre de contrôle qui comprend la fonction notamment de commander les chaufferettes en fonction de la température à atteindre. On voit sur cet exemple que le thermocouple est attaché à la paroi 318 par le moyen d'une équerre 342.

Le dispositif supporte également trois organes 350 de mesure de la distance entre le tourillon 111 et l'arbre BP à l'intérieur de ce dernier. Ils sont répartis à équidistance les uns des autres, par exemple à 3 heures, 6 heures et 9 heures, en vue arrière du moteur. On procède à l'alignement de l'arbre BP en comparant les écarts de mesure des distances sur ces trois points et en agissant corrélativement sur le positionnement transversal de l'arbre dans le système de manutention. Les organes de mesure des distances 350 sont de type laser par exemple. On les a représentés schématiquement sur les figures 7 et 8. Ils sont montés sur des bras supports 351 fixés sur les bras horizontaux du supports 230. Ils sont mobiles entre deux positions comme cela apparaît sur la figure 8 qui montre un organe de mesure positionne en haut par rapport à l'axe du moteur. Quand ils sont dans la position 350 de la figure, ils visent le tourillon ; en les décalant dans la position 350', ils visent l'arbre basse pression. On peut ainsi en déduire le jeu entre l'arbre et le tourillon. Les trois ensemble répartis autour du tourillon permettent de connaître avec précision la position relative des deux axes. On procède à la correction en déplaçant par les moyens de commande appropriés le module de turbine dans l'espace.

Une console de contrôle est montée sur le bâti. Elle reçoit les signaux des capteurs de température ainsi que des mesures des distances. Elle comprend également des moyens pour fournir des signaux d'alarme du type par exemple feu vert feu rouge pour informe l'opérateur de la situation et de l'état de préparation du palier avant accostage.

Le déroulé des opérations est le suivant.

Le moteur est partiellement monté. La soufflante 3 et le corps HP 5 sont assemblés. Le module BP 7 est en attente.
a) Pour le montage de la bague extérieure 123 dans le tourillon,
   - on met en place le dispositif comme cela est représenté sur la figure 7, et
   - on chauffe le tourillon 111 à la température spécifiée pour le montage; l'obtention de cette température autorise la mise en position de repli comme sur la figure 6, le montage de la bague 123, et le serrage de l'écrou 125 ;
b) Pour le centrage de l'arbre de turbine,
   - on met l'appareillage en position d'utilisation,
   - on introduit l'arbre BP 101 dans le corps HP, et
   - on active le système de mesure des distances 350. Les mesures relevées par les organes 350 permettent le centrage de l'arbre 101, dans les limites spécifiées, par rapport au tourillon.
c) Pour le chauffage de l'ensemble tourillon- bague extérieure,
   - on met l'appareillage en position d'utilisation, et
   - on déclenche le chauffage. Le chauffage est piloté en fonction des températures mesurées par les thermocouples 340 jusqu'à ce que la température de consigne soit atteinte, dans les limites spécifiées. L'obtention de la température dans la plage spécifiée autorise, la mise en positon de repli de l'appareillage.

On termine le montage en procédant à l'accostage final.

Le dispositif de l'invention confère à l'ensemble la maîtrise simultanée des deux conditions majeurs de montage pour assurer un assemblage du roulement sans risque.

On comprend en outre que l'invention n'est pas limitée au montage du module de turbine BP dans un corps HP d'un moteur à turbine à gaz. Elle s'applique à toutes les situations équivalentes de montage d'un deuxième module assemblé par un palier dans un premier module.

## Revendications

1. Dispositif de chauffage d'une pièce cylindrique de diamètre donné, au moyen de gaz chaud, **caractérisé par le fait qu'**il comprend au moins deux chaufferettes (310, 312, 314) délivrant chacune un flux de gaz chaud et débouchant dans une enceinte annulaire (316), dont le diamètre intérieur est légèrement supérieur audit diamètre.

2. Dispositif de chauffage selon la revendication précédente dont les chaufferettes (310, 312, 316) sont équidistantes les unes des autres.

3. Dispositif de chauffage selon l'une des revendications précédentes dont l'enceinte (316) comprend une paroi intérieure perforée (320).

4. Dispositif selon l'une des revendications précédentes dont les chaufferettes sont électriques.

5. Utilisation d'un dispositif selon l'une des revendications précédentes pour le chauffage d'un tourillon (111) métallique dans lequel on monte une bague (123) de roulement d'un palier

6. Utilisation selon la revendication précédente selon laquelle on mesure la température à la surface du tourillon et on pilote l'alimentation en gaz chaud en fonction de la dite température.

7. Utilisation selon l'une des revendications 5 et 6 dans l'assemblage d'un palier inter-arbres dans une turbomachine à double corps.

## Claims

1. A device for heating a cylindrical component of given diameter, by means of hot gas, **characterized in that** it comprises at least two heaters (310, 312, 314) each delivering a stream of hot gas and emerging in an annular chamber (316), the inside diameter of which is slightly greater than said diameter.

2. The heating device as claimed in the preceding claim, the heaters (310, 312, 316) of which are equidistant from one another.

3. The heating device as claimed in one of the preceding claims, the enclosure (316) of which includes a perforated inner wall (320).

4. The device as claimed in one of the preceding claims, the heaters of which are electrical heaters.

5. The use of a device as claimed in one of the preceding claims for heating a metal journal (111) in which a bearing ring (123) for a bearing is mounted.

6. The use as claimed in the preceding claim, in which the temperature at the surface of the journal is measured and the supply of hot gas is controlled according to said temperature.

7. The use as claimed in one of claims 5 and 6 in the assembling of an inter-shaft bearing in a double-body turbomachine.

## Patentansprüche

1. Vorrichtung zum Heizen durch heißes Gas eines zylindrischen Teils mit einem bestimmten Durchmesser, **dadurch gekennzeichnet, dass** sie mindestens zwei Heizelemente (310, 312, 314) umfasst, die jeweils einen heißen Gasstrom abgeben und in einen ringförmigen Raum (316) einmünden, dessen Innendurchmesser geringfügig größer als der genannte Durchmesser ist.

2. Heizvorrichtung nach dem vorhergehenden Anspruch, wobei die Heizelemente (310, 312, 316) gleichmäßig voneinander beabstandet sind.

3. Heizvorrichtung nach einem der vorhergehenden Ansprüche, wobei der Raum (316) eine perforierte Innenwand (320) umfasst.

4. Heizvorrichtung nach einem der vorhergehenden Ansprüche, wobei die Heizelemente elektrisch sind.

5. Verwendung einer Vorrichtung nach einem der vorhergehenden Ansprüche zum Heizen eines metallischen Lagerzapfens (111), in den ein Laufring (123) eines Lagers eingebaut wird.

6. Verwendung nach dem vorhergehenden Anspruch, nach dem die Temperatur an der Oberfläche des Lagerzapfens gemessen wird und die Versorgung mit heißem Gas in Abhängigkeit von der Temperatur angesteuert wird.

7. Verwendung nach einem der Ansprüche 5 und 6 beim Zusammenbau eines Zwischenwellenlagers in einem Zweiwellen-Turbotriebwerk.
